# EUROPEAN PATENT SPECIFICATION

(11) **EP 3 932 564 B1**
(45) Date of publication and mention of the grant of the patent: **01.05.2024**
(21) Application number: 20183449.6
(22) Date of filing: 01.07.2020
(51) Int. Cl.: B05B 5/00, A01G 15/00

(54) **APPARATUS FOR PRECIPITATION OF ATMOSPHERIC WATER**
VORRICHTUNG ZUR AUSFÄLLUNG VON ATMOSPHÄRISCHEM WASSER
APPAREIL DE PRÉCIPITATION D'EAU ATMOSPHÉRIQUE

(43) Date of publication of application: 05.01.2022
(73) Proprietor: WeatherTec AG, 6302 Zug (CH)
(72) Inventor: Fluhrer, Helmut, 8955 Oetwil an der Limmat (CH); Davydova, Elena, 8955 Oetwil an der Limmat (CH); Saveliev, Yuri, Phayao (TH)
(74) Representative: Kurig, Thomas

(56) References cited:
- WO-A1-82/01481
- US-A- 4 328 940
- US-A1- 2020 008 370

## Description

### Field of the invention

The present invention relates to an apparatus for precipitation of atmospheric water, for rainfall enhancement in water stressed regions and other applications of weather modification.

### Prior Art

Conventional precipitation devices are disclosed in document WO 2010/012354 A1.

In this document, an apparatus for weather modification and rainfall enhancement is provided, wherein the apparatus comprises an insulated emitter electrode with or without a Malter Film, means for providing the emitter electrode with an electric charge and means for earthing the apparatus.

Further, the apparatus for weather modification can comprise a lighter-than-air craft suitable for carrying an emitter electrode.

A known method of increasing the amount of precipitation in a target region comprises analyzing the meteorological situation in and/or close to the target region, and providing the emitter electrode with an electric charge in response to the meteorological analysis, thereby causing the emitter electrode to ionize air molecules and charge ambient aerosols in the vicinity of the emitter electrode.

Document WO 82/01481 A1 discloses a method for production of electrically charged droplets of water to reduce air borne dust and an apparatus for performing the dust mitigation. As alternative, a second fluid such as air or oil can be added to decrease the conductivity of the water. The water / fluid from a source at earth potential is supplied at moderate to high pressure passes through an orifice plate or venturi section with air inlet ports is transported by a duct and feeds the nozzles. On the way of the water / fluid to the nozzles it is injected with air to reduce the electrical conductivity of the water / fluid.

The object of the present invention is to provide an apparatus for precipitation of atmospheric water and other applications of weather modification with high standards regarding effective precipitation due to increased updraft of the air ions and other charged particles, environmental compatibility by means of using only 100% natural fluids, enhanced application possibilities, mobility, economic viability, the possibility of controlling the apparatus from a remote place depending from meteorological data from the application area of the apparatus and thereby enhancing the rainfall.

### Summary of the invention

The invention is set out in the appended set of claims. The following disclosure serves a better understanding of the present invention. The object of the invention is achieved by an apparatus for precipitation of atmospheric water, comprising a plurality of spraying nozzles for ejecting droplets; at least one insulated charging electrode, arranged adjacent to the plurality of spraying nozzles, for ionizing the droplets, wherein the charging electrode is connected to a high-voltage direct current power supply, wherein the spraying nozzles are fed with eco-friendly particles of organic and / or inorganic insoluble material suspended in water by a pump, electrically coupled with a low voltage direct current supply and hydraulically connected to the nozzles and accommodated in the mast, through at least one pipe or hose.

The advantage of the apparatus for precipitation of atmospheric water and other applications of weather modification according to the invention is the use of spraying nozzles for ejecting droplets in combination with an adjacent charging electrode for the inductive charging of droplets. Compared to space charge producing apparatuses for weather modifications known in previous art, the apparatus in this invention can produce significantly higher space charge, the initial local updraft and, at certain environmental conditions, initiate cloud droplet freezing at higher temperatures than otherwise would occur.

The advantage of particles of organic and / or inorganic insoluble material suspended in water is the 100% environmental compatibility, wherein a pump and an at least one pipe or hose is self-contained in the mast and thus protected against any damage.

The spraying nozzles are mounted on a non-conductive mast and directed in an upward direction.

The advantage of a non-conductive mast is the variability in length and diameter depending on which dimensions are suitable for the installation target region.

It is preferred that a size of the particles of organic and / or inorganic insoluble material suspended in water is less than or equal to 1 µm.

The characteristic size of suspended particles less than or equal to 1 µm results in evaporation residues not larger than 3-5 µm, a limiting size of natural bio-aerosols such as bacteria and/or spores of fungi that play an important role in the rain formation.

It is preferred, that the spraying nozzle each have an orifice diameter of between 0.3-1.2 mm, preferred 0.4-1.1 mm, more preferred 0.5-1.0 mm.

This has resulted in good atomization of water suspension into droplets, charging of produced droplets and thus the results of atmospheric water precipitation and other applications of weather modification.

It is preferred, that the spraying nozzles have a liquid consumption of 40-80 ml/min, more preferred 45-70 ml/min, and even more preferred 50-60 ml/min per each nozzle, thereby enhancing precipitation effectively.

It is preferred, that the spraying nozzles produce droplets having an average diameter between 10-140 µm, more preferred 15-120 µm, even more preferred 20-100 µm.

The mast further supports at least one internal tank for storing the organic and / or inorganic insoluble material suspended in water.

The advantage of an internal tank is an additional storage, so that this tank is minimized many times. An external tank can be used for larger additional storage and can cooperate with the internal tank.

It is preferred that another pump is located outside the mast for refilling at least one internal tank.

The advantage of another pump is a backup system and / or to guarantee sufficient refilling.

The charging electrode is located in ejection direction above the spraying nozzles.

The advantage of this location of the charging electrode is that charged droplets can be ejected and propagated upwardly in an unobstructed way and all ejected particles can be covered by the electric field.

It is preferred, that the charging electrode operates at 4-7 kV, preferably 2-15 kV.

The advantage of higher operating voltage of droplet charging electrode is that produced droplets have smaller size and higher charge-to-mass ratio, resulting in a higher space charge of droplet plume and higher electrical mobility of droplets and their evaporation residues.

It is preferred, that the charging electrode consumes net electric current after leak current of 3-10 µA, more preferred 3.5-8.5 µA, even more preferred 4-7 µA per each nozzle.

It is preferred, that a polarity of the charging electrode is positive and a polarity of the charged droplets is negative.

It is preferred, that the high-voltage direct current power supply is a low-to-high direct current voltage converter located above the emitter electrode. The advantage of this configuration is, that the pump, the low voltage direct source, and the low-to-high direct current voltage converter are located in the vicinity of spraying nozzles.

It is preferred, that the apparatus further comprises an insulated emitter electrode, which is mounted on the non-conductive mast below the spraying nozzles and electrically coupled with another high-voltage direct current power supply.

The advantage of an insulated emitter electrode is that charged droplets and other charged particles further produced by charged droplets such as their evaporation residues, air ions and ambient aerosols charged by air ions are moved upward driven by electric field produced by emitter electrode and generate the initial local upward air motion (updraft) by momentum transfer from moving charged droplets and other charged particles, further promoting vertical propagation of the produced space charge plume.

It is preferred, that the polarity of the other high-voltage direct current power supply is opposite to the polarity of the high-voltage direct current power supply.

It is preferred, that the insulated emitter electrode is of planar shape parallel to a ground.

It is preferred, that the emitter electrode of planar shape has means for air flow such as perforation or a form of mechanically stable grid or mesh.

It is preferred, that the emitter electrode has a plurality of emitter electrode assemblies.

The advantage of the emitter electrode assemblies is the possibility of easy assembly and variability in terms of different sizes, locations and orientations.

It is preferred, that the emitter electrode assemblies comprise an angular range around the mast of 360 °, more preferred 180-360 °, even more preferred less than 180 °.

It is preferred, that the emitter electrode assemblies have a triangular shape built by a mesh of wire. The advantage of this emitter electrode design is a high emitting power or updraft of charged particles.

It is preferred, that the emitter electrode assemblies have a triangular shape and a mesh of wire, wherein a second triangular shape with a mesh of a second wire is included.

The advantage of such emitter electrode design has increased emitting power or updraft over the design without a second triangular shape with a mesh of a second wire.

It is preferred that the emitter electrode operates at 60-100 kV.

It is preferred that the emitter electrode consumes net electric current after leak current-of 1-4 mA, preferred 1.25-3 mA, more preferred 1.5-2.5 mA.

It is preferred, that the power supply of the high-voltage direct current to the charging electrode, the emitter electrode and the pump is located inside the mast.

The advantage of the location of the high-voltage direct current to the charging electrode, the emitter electrode and the pump inside the mast is a valuable protection against any damage.

It is preferred, that the emitter electrode is an emitter electrode of corona discharge.

The advantage of the emitter electrode of corona discharge is that space charge produced below it adds to the electric field above it and thus enhances the upward movement of charged droplets and other charged particles derived from them.

It is preferred, that the emitter electrode of corona discharge comprises at least one shielding electrode, electrically coupled to the emitter electrode, mounted on the mast below the spraying nozzles or internal tank. The advantage is in this case, that a shielding electrode electrically coupled to the emitter electrode of corona discharge and mounted on the mast below the spraying nozzles, storage tank and other pieces of equipment that are at electrical potentials lower than the electrical potential of emitter electrode should be provided to prevent the undesirable corona discharge between the emitter electrode and those equipment pieces.

It is preferred, that the shielding electrode comprises a perforated metal sheet parallel to the ground. The advantage is a simple configuration, wherein the emitter electrode of corona discharge is of planar shape parallel to the ground such as mechanically supported wire mesh or electrically coupled segments of wire parallel to each other and to the ground. This is because the elevation of some parts of non-planar emitter electrode of corona discharge relative to the bottom part of this electrode, which enhanced the performance of the latter is no longer needed because of the presence of space charge of charged droplets and other charged particles derived from above the emitter electrode of corona discharge.

The advantage of space charge formed by charged droplets and other charged particles derived from them above the emitter electrode of corona discharge is the enhancement of corona discharge below the emitter electrode. As a result, a higher space charge is produced by the emitter electrode and/or the another high-voltage direct current power supply can be operated a low voltage which is technically easier.

The advantage of the latter enhancement of space charge produced by emitter electrode of corona discharge is the further enhancement of upward propagation of charged droplets and other charged particles derived from them.

It is preferred, that shielding electrodes are provided at all electric and hydraulic connections to equipment on the mast and electrically coupled to the emitter electrode of corona discharge.

The advantage of all electric and hydraulic connections to the equipment on the mast having shielding electrodes electrically coupled to the emitter electrode of corona discharge, that are extended to a distance from the mast comparable to the elevation of this emitter electrode above the ground, is to prevent unwanted corona discharges to those connections, wherein the shielding electrodes can be provided in the form of coaxial mesh coatings of wires, pipes, or hoses. The shielded parts of those connections are elevated by means of the shared mast to a distance not below the emitter electrode of corona discharge to ensure its good performance.

It is preferred that the high-voltage direct current power supply is a low-to-high direct current voltage converter located above the shielding electrode on the mast and powered from the low voltage direct current supply.

The advantage of this configuration is, that the pump, the low voltage direct source, and the low-to-high direct current voltage converter are located in the vicinity of spraying nozzles.

It is preferable, that the high-voltage direct current power supply and the other high-voltage direct current power supply are powered from at least one low voltage current source with battery backups. The advantage is a protection against power outage.

It is preferred, that a circuit-breaker stops power supply and flow of the organic and / or inorganic insoluble material suspended in water.

The advantage of a circuit-breaker is the protection against damage caused by operation or insulation failures.

It is preferred, that the apparatus further comprises means for electric grounding by water connection. Grounding is a protection of the apparatus against failures of insulation or imbalances of electric charges.

It is preferred, that the organic and / or inorganic insoluble material has a freezing temperature of 0 to -10 °C, preferred -0.3 to -6.5 °C, more preferred -0.5 to -7,0 °C.

The advantage of higher freezing temperatures is the greater variability of the environmental application areas.

### Brief description of the drawings

Preferred embodiments of the invention are described with reference to the following drawings, wherein
Fig. 1 shows an apparatus for precipitation of water,
Fig. 2 shows an arrangement of several emitter electrode assemblies on a pyramidal frame,
Fig. 3a to 3d show details of the arrangement shown in Figure 2,
Fig. 4a and 4b show triangular embodiments of elementary emitter electrode assemblies,
Fig. 5 shows an alternative embodiment of a triangular elementary emitter electrode assembly, and
Fig. 6 shows a further embodiment of a triangular elementary emitter electrode assembly.

### Detailed description of the drawings

The main new feature of upgraded apparatuses is deploying one or more spraying nozzles, i.e. nozzles that atomize a liquid into small droplets, and electrically charge them by inductive charging in a strong electric field created in the vicinity of the nozzle's capillary exit point with at least one insulated charging electrode (in the following the spraying nozzles and the charging electrode will be called electro-spraying nozzles). In contrast to ordinary nozzles, the average size of the produced droplets is much less than the size of capillary's orifice. Even in existing applications where the charge of the droplets is not important, this has advantages of spraying water suspensions of small particles, operating at lower water pressure, and using capillaries with larger orifice, which reduces the risk of capillary blockage with contaminant particles.

Ejected from the electro-spraying nozzles, a plume of charged droplets will be created which trajectory and dispersion is determined by air motions and electric field profile. In turn, this profile is determined by space charge density profile of the plume and external electric field, if there is any. The latter includes electric field of image charges on surrounding objects. Plume droplets preserve electric charge as the droplet evaporates and shrinks. Therefore, surface electrical charge builds up as all the charge is held on the surface of an even smaller particle. At some stage a critical point is reached. This point is Rayleigh limit 32 V/cm of the electric field strength on the droplet surface after which the charge is removed by the electrical breakdown of air, i.e. the corona discharge, in the form of air ions. If droplets are formed from a suspension of particles, one or more charged evaporation residues and air ions will be formed in the end of process. The produced plume will comprise air ions and charged aerosols.

The proposed modification of natural aerosol chargers, i.e. emitter systems, for weather modification is to deploy electro-spraying nozzles alternatively or additionally to emitter electrode of corona discharge with the same electric sign of charged droplets as the sign of emitter electrode, i.e. negative. In case of a ground-based system with emitter electrode, electro-spraying nozzles are elevated at a distance of 0.5-2 m above the top of emitter electrode directed vertically, i.e. the nozzle's plumes directed upward. In this configuration, the space charge of the nozzle's plume will enhance the charge accumulation in the bottom of emitter wires by creating additional image charge, leading to the enhanced corona discharge and possibility to operate the emitter wires at lower voltages with less technical problems such as leakage currents. From the other hand, the combined electric field of the emitter electrode and the space charge generated by this electrode below will cause upward electric forces acting on ions and evaporating droplets of the nozzle's plume. As a result of the momentum transfer between moving ions and droplets, electro-hydrodynamic air flow, also known as electric wind, will be formed in the form of artificial updraft, promoting vertical plume propagation. This is in contrast to the case of nozzles at a low elevation above the ground, where the electric force between the plume's space charge and its electrical image on the ground may overcome the force of natural updraft. In the former case of nozzles above the emitter electrode, the plume may be elevated high enough to be practically fully controlled by the updraft and further elevated.

Electric charge released by droplets, so-called charging current, from a single electro-spraying nozzle could be high. For example, one type of commercial electro-spraying nozzles used in modern agriculture to enhance the attachment of pesticide solution droplets to plant leaves operates at about 6-10 kV has the orifice diameter 0.7-0.8 mm, liquid consumption of about 200 mL/min, and produces droplets with the average diameter 80 µm. Electric current consumed by such a nozzle is about 7-10 µA, with most of it in the form of charging current as leakage currents can be very low at this operating voltage range. In contrast, leakage currents in corona chargers under consideration operating at the voltage range values of about 10 times higher could be significantly higher by an order of magnitude. Second, only a small fraction of the consumed current, after leakage currents, which is mostly the charge of ions produced per unit time is transferred to ambient atmospheric aerosols per unit time, which mostly happens in the Warburg area below the emitter electrode. In this zone, a large fraction of ions reaches the ground and recombines on it, thus avoiding the attachment to ambient aerosols. Moreover, some of aerosols charged by artificial ionization, especially those charged closer to the ground and at low wind atmospheric conditions, are not convected by updrafts because of the downward electric force caused by image charge as mentioned above.

In this configuration, ambient aerosols are charged in two ways, (1) by ions produced in corona discharge from emitter electrode like in previous design and (2) by ions produced in corona discharge of super-charged evaporating droplets. The second mechanism is very likely to be dominant.

If the system is in the area of the forming updraft that results in the creation of a cumulous cloud, previously charged aerosols may be present in cloud. Most of ambient aerosols may lose their original charge or this charge may be significantly diminished and thus comparable to charges of evaporation residues formed from droplets in cloud boundary. The droplets of electro-spray may carry 10000-20000 elementary charges and even more and their evaporation residues may carry a few of thousands of elementary charges. Assuming conservatively that those charges may diminish by order of magnitude on their travel into a cloud, they are still highly charged to affect the cloud microphysics. Some of them may form for non-thunderstorm clouds relatively highly charged droplets not only near the cloud boundary but deep inside the cloud as well, which may promote droplet coalescence and contact freezing in super-cooled cloud areas by evaporation residues of cloud droplets charged with the opposite sign. Other highly charged evaporation residues of nozzle droplets that did not become charged droplets may serve as highly electrically enhanced contact freezing nuclei that may attach to droplets of both signs by Coulomb and / or image charge forces.

In this case, it is possible to increase the probability of contact freezing by selecting the material of particles suspended in the electro-sprayed water with the highest possible freezing temperature.

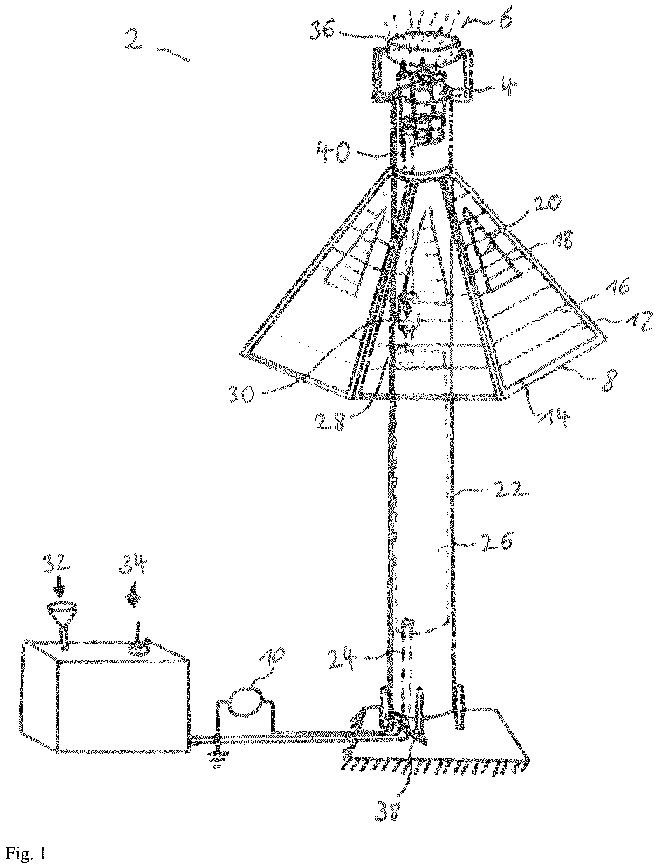

Hereinafter, an apparatus for precipitation of water according to the present invention is described according to Fig. 1.

A mast 22 is the central part of the installation. It is hollow, made of a non-conductive, insulating and rigid material, e.g. fiberglass, and at least one fixation means is fixing it to the ground. The mast 22 has insulation means and has a height dimension between 4 and 40 m, preferably between 6 and 30 m, more preferred between 8 and 15 m. The function of the mast 22 is to provide a light and mobile mounting structure for the installation parts with easy access and to protect sensitive parts against damage.

At the top of the mast 22, a plurality of spraying nozzles 4 is mounted for spraying particles 6 in an upward direction to increase the free surface for better ionization. The material of the nozzles 4 can be selected from brass, high-grade steel, polyvinylidene fluoride, aluminum, silicon carbide, titanium and / or gray cast iron. The nozzles 4 are arranged side by side with a spraying direction away from the earth's surface.

In the spraying direction of the nozzles 4, an insulated charging electrode 36 is arranged to ionize the particles 6 leaving the nozzles 4. The charging electrode 36 is preferred a ring electrode, which surrounds all particles 6 being ejected from the nozzles 4. The charging electrode 36 is fixed to the mast 22 with at least one fixation means, wherein at least one fixation means is hollow and guides the power supply cable or wire provided by a high-voltage direct current power supply 10 from the inside of the mast 22 to the charging electrode 36.

The nozzles 4 are fed with organic and / or inorganic insoluble material 32 and water 34 by a pump 30 through pipes 24, 28, 40 and an internal tank 26.

The insoluble material 32 and water 34 are 100 % natural fluids and not harmful to nature. Examples for insoluble material 32 are table salt, sea salt, talcum powder, soils, dust, silver iodide, potassium iodide, solid carbon dioxide, liquid propane, potassium chloride, sodium chloride, proteins and / or bacteria. Both, the insoluble material 32 and water 34, have to be provided to the apparatus 2 using an input means outside the mast 22, which is directly connected to the tank 26 through pipe 24. If the tank 26 is filled with the insoluble material 32 and water 34, no providing of the insoluble material 32 and water 34 through a separate input means outside the mast 22 is necessary for a certain time period.

The pump 30 is located inside the mast 22 with direct connection to the nozzles 4 through pipe 40 and direct connection to the tank 26 through pipe 28, and uses direct current, provided by a high-voltage direct current power supply 10.

The high-voltage direct current power supply 10 is located outside the mast 22 and can be a solar power system, wind power plant, geothermal system and / or hydroelectric power plant.

The high-voltage direct current power supply 10 further supplies an insulated emitter electrode 8 with electric power, wherein the emitter electrode 8 is mounted outside the mast 22 below and underneath the nozzles 4. The power for the emitter electrode 8 is supplied from a power supply located inside the mast 22.

The emitter electrode 8 provides corona discharge and comprises one or more emitter electrode assemblies 12 of corona discharge, which are mechanically and / or electrically coupled to each other, wherein the emitter electrode assemblies 12 each have a triangular shape 14 and a mesh of wire. A second triangular shape 18 with a mesh of a second wire 20 is included in the triangular shape 14 for increased emitting power respectively updraft.

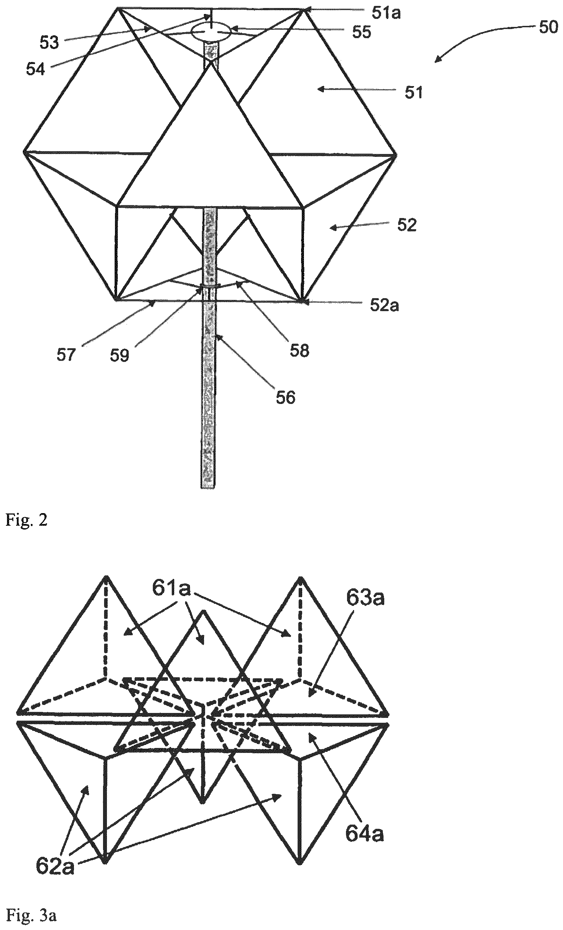

The emitter electrode 8 is further illustrated in the following description of Fig. 2,3,4 and 5.

Electric grounding of the apparatus is done with water 34 connection for creating a reference potential and potential equalization, respectively.

A circuit-breaker 38 is located before the point of entry of the power supply and the pipe for the insoluble material 32 and water 34 to stop the flow of the current, the insoluble material 32 and water 34 or both if there is a reason. Therefore, damage caused by operation or insulation failures can be avoided.

In embodiment 50 in Fig. 2, six emitter electrode assemblies in the shape of a triangular pyramid are deployed. The apexes 51a and 52a of emitter electrode assemblies 51 and 52 point alternatively upwardly and downwardly, respectively. This design enables improved ventilation by horizontal winds and reduces the number of passes of the same air parcels containing space charge through the emitter electrode assemblies 51 and 52. For extra stability, the apexes of upward oriented pyramids are connected by rods 53 which do not carry a strong load and therefore can be lightweight. In turn, these rods are connected with rods or support ropes 54 to a plate 55 attached to the top of the mast 56. In a similar way, the apexes of downward oriented pyramids are connected by rods 57 which, in turn, are connected with rods or support ropes 58 to the bracket 59 attached to the mast.

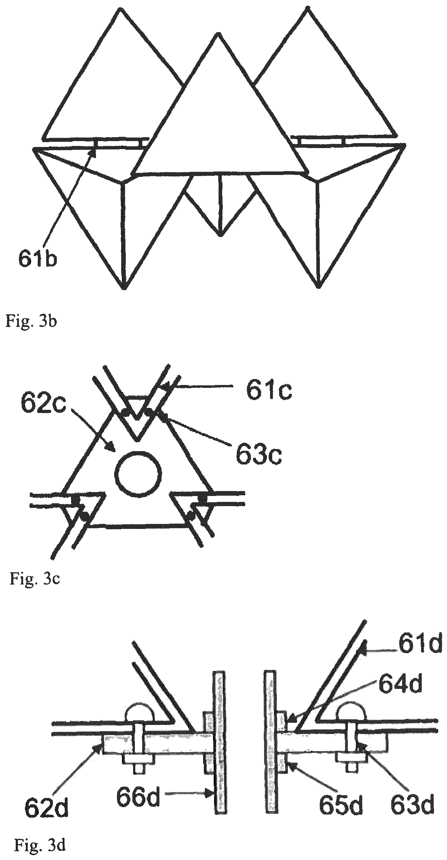

In Fig. 3a, the bases of upward oriented pyramids 61a and the bases of downward oriented pyramids 62a are arranged in different planes 63a and 64a, respectively. The edges of pyramid bases in different planes are mechanically coupled with supports 61b in Fig. 3b, preferably allowing a certain degree of flexibility. In each plane, as shown in Fig. 3c, the edges of the corresponding pyramids 61c are fixed to the support plate 62c with bolts and nuts 63c. As shown in Fig. 3d, the support plate 62d of each plane, to which the edges of the pyramid bases 61d are fixed with bolts and nuts 63d, is fixed at a certain position along the mast 66d with top and bottom brackets 64d and 65d respectively.

A pyramidal shape, however, is not the only one optimal for an emitter electrode assembly. A large variety of emitter electrode assemblies can be implemented in a modular design where frames of a planar shape, the surfaces of which are traversed by at least two parallel segments and preferably arranged at an angle to the surface of the Earth, are mechanically and electrically coupled to each other. Such an emitter electrode assembly module comprising a planar frame and the supported wire segments of an emitter electrode of corona discharge arranged parallel to each other with a separation distance between them is referred to hereinafter as an elementary emitter electrode assembly.

In general, the shape of an elementary emitter electrode assembly frame can be polygonal, but mechanically the most stable shape is triangular. Because of their planar shape, preassembled elementary emitter electrode assemblies can be easily transported in large quantities and emitter electrode assemblies can be assembled from and disassembled into elementary emitter electrode assemblies at an installation site.

An emitter electrode assembly of pyramidal shape can be assembled from three or more elementary emitter electrode assemblies with the same size and shape of isosceles triangles. Compared to a pyramidal emitter electrode assembly where the wire segments form a continuous wire, that is, a wire that is wound around the whole frame in one strand, this embodiment is more robust as breaking the wire, e.g. by a bird, will disrupt a smaller fraction of wiring.

The sides of an elementary emitter electrode assembly frame, which can be rods or planks, for example, can be made of conductive or non-conductive materials. If a metal frame is used, e.g. made of hollow tubes, care should be taken to prevent the wire from coming into immediate contact in the open air with the frame made of a different metal. Otherwise, wire segments may be quickly destroyed at contact points in the electrochemically corrosive environment and thus fall apart.

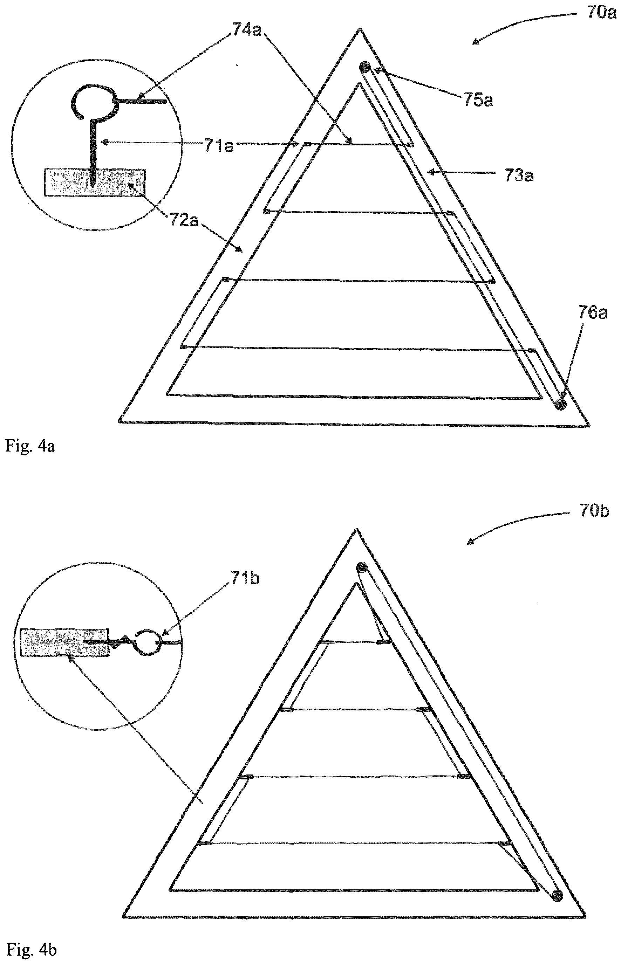

In one triangular embodiment of elementary emitter electrode assembly 70a shown in Fig. 4a, a number of wire segment supports 71a, for example in a hook-like shape, are fixed in pairs to each of two sides 72a and 73a of the frame along their length, each holding the corresponding end of wire segment 74a. The wire segments may form a continuous wire or be wound around the supports in more than one strand. The ends of these strands (in this case a single strand is shown) are fixed at points 75a and 76a, via which this elementary emitter electrode assembly is electrically coupled to other elementary emitter electrode assemblies, which may be electrically coupled to make this elementary emitter electrode assembly less prone to wire breakage. Using non-metallic supports or those made of the same metal as the wire which are flexible to a certain degree, is preferable, as this may reduce stress on the wire if the sides of the frame are slightly bent under variable external forces. The vertical post of supports may also be made in the form of a spring. A spring-based support 71b on the inward side of the frame is shown in Fig. 4b.

A solution proposed herein is to separate the weight bearing frame structure from the wire supporting frame structures, but to have them flexibly coupled. In this configuration, a number of smaller elementary emitter electrode assemblies with lightweight frames which are stiff enough to support denser wiring with thinner wire are coupled with flexible joints to each other and to a weight bearing (external) planar frame. If the wiring of an elementary emitter electrode assembly is broken, this elementary emitter electrode assembly can be quickly replaced without the need for re- wiring it onsite. As a non-limiting example, a flexible joint can be a spring or a zigzag shaped piece of a suitable wire acting as a spring. As in the case of elementary frames, larger emitter electrode assembly structures can be assembled from external frames supporting elementary emitter electrode assemblies.

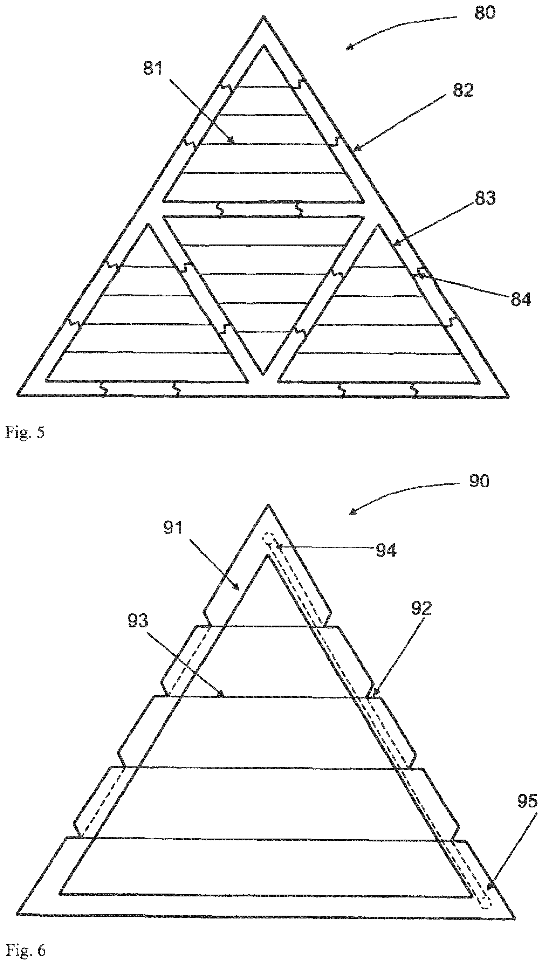

Fig. 5 illustrates a non-limiting example of how a triangular elementary emitter electrode assembly 80 can accommodate a larger total length of thinner wire 81 by making the frame 82 external for a number of smaller elementary emitter electrode assemblies 83 connected with flexible joints 84.

Another triangular embodiment of an elementary emitter electrode assembly 90 to be supported by an external frame is shown in Fig. 6. Frame 91, made of flat planks of an insulating material, for example painted wood, has notches 92 on each of two sides of the frame along their length, through which the wire 93 is wound around the frame as shown, forming parallel segments between notches on the opposite sides of the frame (wire on the opposite side of the frame is shown as a dashed line). The ends of the wire strand are fixed at points 94 and 95, via which this elementary emitter electrode assembly is electrically coupled to other elementary emitter electrode assemblies, and can be optionally electrically coupled.

Alternatively, or additionally to using external frames which support smaller elementary emitter electrode assemblies with flexible joints, a wire mesh can be used as an emitter electrode instead of parallel wire segments. By using such a mesh in elementary emitter electrode assemblies, which is self-supporting to a certain degree, larger frames can be used as mesh is much less sensitive to frame deformations than wires. Attaching mesh to the frame may be achieved in different ways without the need for multiple supports or notches in the case of wire segments. Compared to the latter, conductive mesh is more robust against breaks both mechanically and electrically. Replacing broken or corroded mesh is also easier.

It is noted that operating an emitter electrode assembly at sub-zero temperatures causes the accumulation of frost on the wire, which reduces its performance as the emitter electrode. To combat this problem, they suggested using an electric heater and fan, blowing warm air towards the emitter electrode assembly. It is also recognized that this technique does not work satisfactorily in the presence of a strong wind, which removes the stream of warm air before it reaches the emitter electrode assembly.

A practical solution to the problem would be to make the wire self-heating by passing a low-voltage current through it. Arranging a low-voltage circuit with a conventional source of electricity such as a transformer is problematic as the electrical separation of high-voltage and low-voltage circuits can be technically difficult and a leakage current may be introduced. The solution proposed herein is to deploy a source of electromagnetic emission, such as a microwave generator with a suitable antenna, to heat the emitter electrode remotely without direct electrical contact. In this case, an electric current is induced in closed wire circuits, such as a wire mesh segment or a wire strand with electrically coupled ends which are parts of the emitter electrode, causing the latter to warm.

The elevation height of an emitter electrode assembly above the ground is an important parameter, which determines aerosol charging efficiency. Ions produced by an emitter electrode assembly tend to flow towards the collector electrode of corona discharge, i.e. downward. Their motion is mostly governed by a strong electric field close to the emitter electrode and, at larger distances from the latter, both by wind and the electric field. As a large proportion of atmospheric aerosols become charged between the emitter electrode assembly and the surface of the Earth, the elevation of the emitter electrode assembly should be preferably high enough to ensure that most of the produced ions are attached to aerosols before they are wasted by recombination when reaching the surface of the Earth.

In still air, this optimal elevation height depends on the spectrum and especially on the number concentration of aerosol particles in atmospheric air, which determine the lifetime of ions in the relatively aerosol-rich terrestrial air where ion recombination can be negligible. Under most conditions, this time usually ranges between 3 and 8 minutes.

Therefore, the optimal elevation height in still air can be estimated as the distance to which ions can travel between the emitter electrode assembly and the surface of the Earth during their lifetime. In practice, this distance for a particular EEA embodiment can be found experimentally by measuring the spatial electric field profile beneath the emitter electrode assembly and the subsequent numerical calculation of the charged particle trajectory (and thus its vertical path) during the ion lifetime, which can also be measured using existing techniques.

Alternatively, the optimal elevation height can be found experimentally by measuring the concentration of negative ions at increasing elevation heights of the emitter electrode assembly. A substantial reduction in ion concentration after a certain elevation would indicate that the optimal elevation has been reached.

In practice, the optimal elevation height, according to experimental studies by Jones and Hutchinson (1975) on producing space charge plumes using a basic point-to-ground corona discharge unit in the presence of wind, should be at least about 9 m. Deploying more advanced embodiments of emitter electrode assemblies such as those proposed herein would probably require even higher elevations. If achieving the optimal height is difficult with a ground support, more space charge generators and/or generator(s) with tethered supports should be deployed.

If deploying more space charge generators to compensate for their performance degradation due to a lower than optimal elevation height, the height should be at least 6 m.

### List of reference signs

- 2: apparatus
- 4: spraying nozzle
- 6: particle
- 8: emitter electrode
- 10: direct current power supply
- 12: emitter electrode assembly
- 14: triangular shape
- 16,93: wire
- 18: second triangular shape
- 20: second wire
- 22, 56, 66d: mast
- 24, 28, 40: pipes
- 26: internal tank
- 30: pump
- 32: insoluble material
- 34: water
- 36: charging electrode
- 38: circuit-breaker
- 50: embodiment Fig. 2
- 51, 52, 70a, 70b: emitter electrode assemblies
- 51a, 52a: apexes
- 53,57: rods
- 54, 58: support ropes
- 55: plate
- 59: bracket
- 61a: upward oriented pyramids
- 61b: support
- 61c: pyramid
- 61d: pyramid base
- 62a: downward oriented pyramids
- 62d: support plate
- 63a, 64a: planes
- 63d: bolt and nut
- 64d: top bracket
- 65d: bottom bracket
- 71a: wire segment supports
- 71b: spring-based support
- 72a: side 1
- 73a: side 2
- 74a: wire segment
- 75a, 76a, 94, 95: fixing points
- 80, 90: elementary emitter electrode assembly
- 81: thinner wire
- 82, 91: frame
- 83: smaller elementary emitter electrode assembly
- 84: flexible joint
- 92: notch

## Claims

1. Apparatus (2) for precipitation of water, wherein the apparatus (2) contains particles of organic and / or inorganic insoluble material (32) suspended in water (34), the apparatus (2) further comprises
a non-conductive mast (22);
a plurality of spraying nozzles (4) for ejecting droplets (6) in an upward direction and mounted at the top of the non-conductive mast (22);
at least one insulated charging electrode (36), arranged adjacent to the plurality of spraying nozzles (4), for ionizing the droplets (6), wherein the charging electrode (36) is located in ejection direction above the spraying nozzles (4) and connected to a high-voltage direct current power supply (10),
**characterized in that** the apparatus (2) further comprising
at least one internal tank (26) supported by the non-conductive mast (22) for storing the particles of organic and / or inorganic insoluble material (32) suspended in water (34); and
a pump (30) accommodated in the non-conductive mast (22), being with direct connection to the spraying nozzles (4) and direct connection to the at least one internal tank (26) through at least one pipe or hose (24, 28, 40),
wherein the spraying nozzles (4) are fed with the particles of organic and / or inorganic insoluble material (32) suspended in water (34) by the pump (30), and the pump (30) is electrically coupled with a low voltage direct current supply.

2. Apparatus (2) according to claim 1, wherein a size of the particles of organic and / or inorganic insoluble material (32) suspended in water (34) is less than or equal to 1 µm.

3. Apparatus (2) according to any of the preceding claims, wherein the spraying nozzle (4) each have an orifice diameter of between 0.3-1.2 mm and/or have a liquid consumption of 40-80 ml/min.

4. Apparatus (2) according to any of the preceding claims, wherein the spraying nozzles (4) produce droplets (6) having an average diameter between 10-140 µm.

5. Apparatus (2) according to any of the preceding claims, wherein another pump is located outside the non-conductive mast (22) for refilling the at least one internal tank (26).

6. Apparatus (2) according to any of the preceding claims, wherein the charging electrode (36) operates at 4-7 kV, preferably 2-15 kV.

7. Apparatus (2) according to any of the preceding claims, wherein the charging electrode (36) consumes net electric current after leak current of 3-10 µA per each spraying nozzle (4).

8. Apparatus (2) according to any of the preceding claims, wherein a polarity of the charging electrode (36) is positive and a polarity of the charged droplets (6) is negative.

9. Apparatus (2) according to any of the preceding claims, wherein the high-voltage direct current power supply (10) is a low-to-high direct current voltage converter located above the emitter electrode (8).

10. Apparatus (2) according to any of the preceding claims, further comprising an insulated emitter electrode (8), which is mounted on the non-conductive mast (22) below the spraying nozzles (4) and electrically coupled with another high-voltage direct current power supply.

11. Apparatus (2) according to claim 10, wherein the polarity of the other high-voltage direct current power supply is opposite to the polarity of the high-voltage direct current power supply (10).

## Patentansprüche

1. Vorrichtung (2) zur Abscheidung von Wasser, wobei die Vorrichtung (2) Partikel aus organischem und / oder anorganischem unlöslichem Material (32) enthält, die in Wasser (34) aufgelöst sind, wobei die Vorrichtung (2) ferner umfasst:
einen nicht leitenden Mast (22);
eine Vielzahl von Sprühdüsen (4) zum Ausstoßen von Tröpfchen (6) in einer Aufwärtsrichtung, die an der Spitze des nichtleitenden Mastes (22) angebracht sind;
mindestens eine isolierte Aufladungselektrode (36), die benachbart zu der Vielzahl von Sprühdüsen (4) angeordnet ist, um die Tröpfchen (6) zu ionisieren, wobei sich die Aufladungselektrode (36) in Ausstoßrichtung oberhalb der Sprühdüsen (4) befindet und mit einer Hochspannungs-Gleichstrom-Stromversorgung (10) verbunden ist,
**dadurch gekennzeichnet, dass** die Vorrichtung (2) ferner umfasst:
mindestens einen internen Tank (26), der von dem nichtleitenden Mast (22) getragen wird, um die in Wasser (34) aufgelösten Partikel aus organischem und / oder anorganischem unlöslichem Material (32) zu speichern; und
eine Pumpe (30), die in dem nichtleitenden Mast (22) untergebracht ist, mit direkter Verbindung zu den Sprühdüsen (4) und direkter Verbindung zu dem mindestens einen internen Tank (26) durch mindestens ein Rohr oder einen Schlauch (24, 28, 40),
wobei die Sprühdüsen (4) mit den in Wasser (34) aufgelösten Partikeln aus organischem und / oder anorganischem unlöslichem Material (32) durch die Pumpe (30) gespeist werden und die Pumpe (30) elektrisch mit einer Niederspannungs-Gleichstrom-Versorgung gekoppelt ist.

2. Vorrichtung (2) nach Anspruch 1, wobei eine Größe der in Wasser (34) aufgelösten Partikel aus organischem und / oder anorganischem unlöslichem Material (32) weniger als oder gleich 1 µm beträgt.

3. Vorrichtung (2) nach einem der vorhergehenden Ansprüche, wobei die Sprühdüsen (4) jeweils einen Öffnungsdurchmesser zwischen 0,3-1,2 mm aufweisen und / oder einen Flüssigkeitsverbrauch von 40-80 ml/min aufweisen.

4. Vorrichtung (2) nach einem der vorhergehenden Ansprüche, wobei die Sprühdüsen (4) Tröpfchen (6) mit einem mittleren Durchmesser zwischen 10-140 µm erzeugen.

5. Vorrichtung (2) nach einem der vorhergehenden Ansprüche, wobei sich außerhalb des nichtleitenden Mastes (22) eine weitere Pumpe zum Nachfüllen des mindestens einen internen Tanks (26) befindet.

6. Vorrichtung (2) nach einem der vorhergehenden Ansprüche, wobei die Aufladungselektrode (36) mit 4-7 kV, bevorzugt 2-15 kV, arbeitet.

7. Vorrichtung (2) nach einem der vorhergehenden Ansprüche, wobei die Aufladungselektrode (36) einen elektrischen Nettostrom nach Leckstrom von 3-10 µA für jede Sprühdüse (4) verbraucht.

8. Vorrichtung (2) nach einem der vorhergehenden Ansprüche, wobei eine Polarität der Aufladungselektrode (36) positiv ist und eine Polarität der geladenen Tröpfchen (6) negativ ist.

9. Vorrichtung (2) nach einem der vorhergehenden Ansprüche, wobei die Hochspannungs-Gleichstrom-Stromversorgung (10) ein Niedrig-Zu-Hoch-Gleichstrom-Spannungswandler ist, der sich oberhalb der Emitterelektrode (8) befindet.

10. Vorrichtung (2) nach einem der vorhergehenden Ansprüche, ferner umfassend eine isolierte Emitterelektrode (8), die an dem nichtleitenden Mast (22) unterhalb der Sprühdüsen (4) angebracht und elektrisch mit einer anderen Hochspannungs-Gleichstrom-Stromversorgung gekoppelt ist.

11. Vorrichtung (2) nach Anspruch 10, wobei die Polarität der anderen Hochspannungs-Gleichstrom-Stromversorgung der Polarität der Hochspannungs-Gleichstrom-Stromversorgung (10) entgegengesetzt ist.

## Revendications

1. Appareil (2) pour la précipitation de l'eau, l'appareil (2) contenant des particules de matière insoluble (32) organique et/ou inorganique en suspension dans l'eau (34), l'appareil (2) comprenant en outre
un mât non conducteur (22) ;
une pluralité de buses de pulvérisation (4) pour éjecter des gouttelettes (6) dans une direction ascendante et montées au sommet du mât non conducteur (22) ;
au moins une électrode de charge isolée (36), agencée à proximité de la pluralité de buses de pulvérisation (4), pour ioniser les gouttelettes (6), l'électrode de charge (36) étant située dans la direction d'éjection au-dessus des buses de pulvérisation (4) et connecté à une alimentation en courant continu haute tension (10),
**caractérisé en ce que** l'appareil (2) comprend en outre
au moins un réservoir interne (26) supporté par le mât non conducteur (22) pour stocker les particules de matière insoluble (32) organique et/ou inorganique en suspension dans l'eau (34) ; et
une pompe (30) logée dans le mât non conducteur (22), étant reliée directement aux buses de pulvérisation (4) et reliée directement audit au moins un réservoir interne (26) par l'intermédiaire d'au moins un tuyau ou conduit flexible (24, 28, 40),
les buses de pulvérisation (4) sont alimentées avec les particules de matière inorganique insoluble (32) en suspension dans l'eau (34) par la pompe (30), et la pompe (30) est reliée électriquement à une alimentation en courant continu à basse tension.

2. Appareil (2) selon la revendication 1, dans lequel une taille des particules de matière insoluble (32) organique et/ou inorganique en suspension dans l'eau (34) est inférieure ou égale à 1 µm.

3. Appareil (2) selon l'une quelconque des revendications précédentes, dans lequel les buses de pulvérisation (4) ont chacune un diamètre d'orifice compris entre 0,3 et 1,2 mm et/ou ont une consommation de liquide allant de 40 à 80 ml/min.

4. Appareil (2) selon l'une quelconque des revendications précédentes, dans lequel les buses de pulvérisation (4) produisent des gouttelettes (6) ayant un diamètre moyen compris entre 10 et 140 µm.

5. Appareil (2) selon l'une quelconque des revendications précédentes, dans lequel une autre pompe est située à l'extérieur du mât non conducteur (22) pour remplir à nouveau ledit au moins un réservoir interne (26).

6. Appareil (2) selon l'une quelconque des revendications précédentes, dans lequel l'électrode de charge (36) fonctionne à 4 à 7 kV, de préférence à 2 à 15 kV.

7. Appareil (2) selon l'une quelconque des revendications précédentes, dans lequel l'électrode de charge (36) consomme un courant électrique net après un courant de fuite de 3 à 10 µA pour chaque buse de pulvérisation (4).

8. Appareil (2) selon l'une quelconque des revendications précédentes, dans lequel une polarité de l'électrode de charge (36) est positive et une polarité des gouttelettes chargées (6) est négative.

9. Appareil (2) selon l'une quelconque des revendications précédentes, dans lequel l'alimentation (10) en courant continu à haute tension est un convertisseur de tension de courant continu basse-haute situé au-dessus de l'électrode émettrice (8).

10. Appareil (2) selon l'une quelconque des revendications précédentes, comprenant en outre une électrode émettrice isolée (8), qui est montée sur le mât non conducteur (22) au-dessous des buses de pulvérisation (4) et reliée électriquement à une autre alimentation en courant continu à haute tension.

11. Appareil (2) selon la revendication 10, dans lequel la polarité de l'autre alimentation en courant continu à haute tension est opposée à la polarité de l'alimentation (10) en courant continu à haute tension.
